# EUROPÄISCHE PATENTSCHRIFT

(11) **EP 1 914 182 B1**
(45) Veröffentlichungstag und Bekanntmachung des Hinweises auf die Patenterteilung: **01.07.2009**
(21) Anmeldenummer: 07016053.6
(22) Anmeldetag: 16.08.2007
(51) Int. Cl.: B65G 47/61, B65G 9/00

(54) **Zuführ-Transport-System für Bügel mit darauf hängenden Gegenständen**
Feeder transport system for hangers with objects hanging therefrom
Système de transport et d'acheminement pour cintres doté d'objets suspendus d'eux

(30) Priorität: 21.10.2006 DE 102006049754
(43) Veröffentlichungstag der Anmeldung: 23.04.2008
(73) Patentinhaber: DÜRKOPP ADLER AKTIENGESELLSCHAFT, D-33719 Bielefeld (DE)
(72) Erfinder: Wend, Michael, 33619 Bielefeld (DE); Janzen, Paul, 33619 Bielefeld (DE)
(74) Vertreter: Rau, Manfred

(56) Entgegenhaltungen:
- EP-A- 0 802 133
- DE-A1- 3 910 268

## Beschreibung

Die Erfindung betrifft ein Zuführ-Transport-System für Bügel mit darauf hängenden Gegenständen, insbesondere Kleidungsstücken, gemäss dem Oberbegriff des Anspruchs 1.

Aus der EP 1 690 811 A1 ist ein Transport-System bekannt, bei dem Transport-Schienen für fahrbare Roll-Haltelemente vorgesehen sind, die ein nach unten ragendes Tragteil aufweisen, in dessen unterem Bereich eine Aufnahme-Öffnung für den Haken eines Bügels ausgebildet ist. Auf den Bügeln werden Gegenstände, insbesondere Kleidungsstücke, transportiert. Diese Roll-Halteelemente können mittels Antriebs-Ketten oder - auf Gefällestrecken - durch Schwerkraft angetrieben werden. Sie können sehr exakt und definiert über Verzweigungen und dergleichen transportiert werden und demzufolge in Lagern und Sortieranlagen und dergleichen vorteilhaft eingesetzt werden. Die Gegenstände tragenden Bügel werden jeweils einzeln von Hand in die Roll-Haltelemente eingehängt. Dies ist aufwändig.

Aus der DE 39 10 269 A1 ist ein Transport-System gemäss dem Oberbegriff des Anspruchs 1 bekannt.

Der Erfindung liegt daher die Aufgabe zugrunde, ein Zuführ-Transport-System der allgemeinen Gattung zu schaffen, mittels dessen jeweils ein Bügel in ein Roll-Halteelement eingehängt werden kann, mittels dessen dann ein Weitertransport des Bügels erfolgt.

Diese Aufgabe wird erfindungsgemäß durch die Merkmale des Anspruchs 1 gelöst. Der Kern liegt der Erfindung liegt darin, dass das Übergabe-Rad jeweils ein Halteelement in einer Position aufnimmt, in der es gegenüber der Vertikalen schräg aus dem Übergabe-Rad herausragt, so dass die Aufnahme-Öffnung - in einer Projektion auf die Horizontale - nach oben offen ist. Durch den Übergabe-Spalt fällt dann jeweils taktweise nur ein Bügel nach unten, der von der Aufnahme-Öffnung aufgefangen wird, da das freie Ende des Hakens sich über der Aufnahme-Öffnung befindet. Der Haken fällt damit gleichsam in die Aufnahme-Öffnung hinein und wird hierdurch vom Halteelement gefangen. Danach wird das Halteelement durch taktweises Drehen in eine vertikale untere Lage gebracht, in der das jetzt mit einem Bügel beladene Halteelement aus dem Übergabe-Rad hinausgleiten kann, während das nachfolgende Halteelement gleichzeitig in die nächste freie Ausnehmung des Übergabe-Rades hineingleiten kann. Die Ansprüche 2 bis 4 geben hierfür vorteilhafte Ausgestaltungen an.

Anspruch 5 gibt wieder, wie auf einfache Weise die Halteelemente dem Übergabe-Rad zugeführt werden können.

Anspruch 6 gibt wieder, wie die jeweils mit einem Bügel versehenen Halteelemente aus dem Übergabe-Rad weiter transportiert werden.

Durch die weiteren vorteilhaften Ausgestaltungen nach den Ansprüchen 7 bis 9 wird sichergestellt, dass jeder Bügel unmittelbar vor Erreichen des Übergabe-Spalts eine definierte Position einnimmt, in der sichergestellt ist, dass er vom Haltelement aufgefangen wird.

Die Ansprüche 10 und 11, und zwar insbesondere Anspruch 11 geben wieder, wie bei einem mechanisierten Transport der Bügel zur Übergabe-Station bei Erreichen des Übergabe-Spaltes der Bügel nicht festgeklemmt wird.

Die Ansprüche 12 und 13 geben wieder, wie Störungen bei der Übergabe des Bügels auf das Halteelement vermieden werden.

Weitere Merkmale, Vorteile und Einzelheiten ergeben sich aus der nachfolgenden Beschreibung eines Ausführungsbeispiels anhand der Zeichnung. Es zeigt
- Fig. 1: eine Seiten-Längsansicht eines erfindungsgemäßen Zuführ-Transport-Systems,

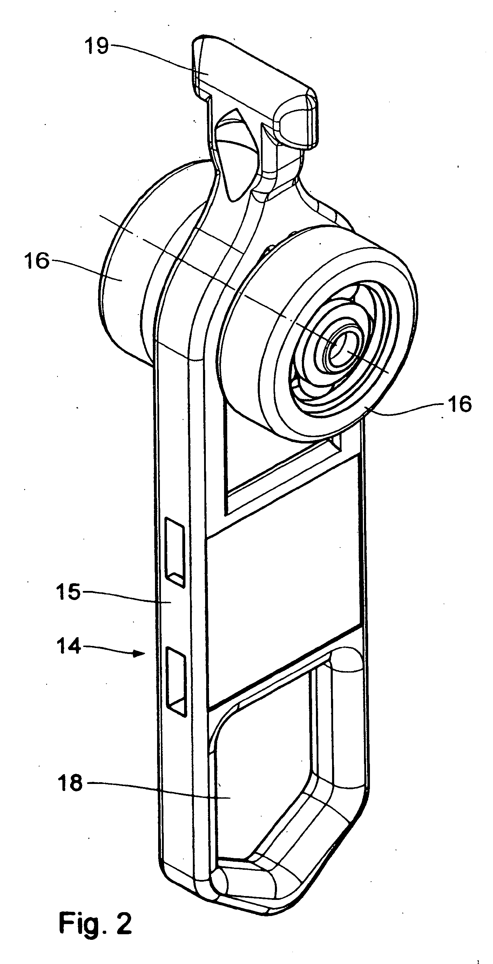

- Fig. 2: ein Roll-Halteelement,

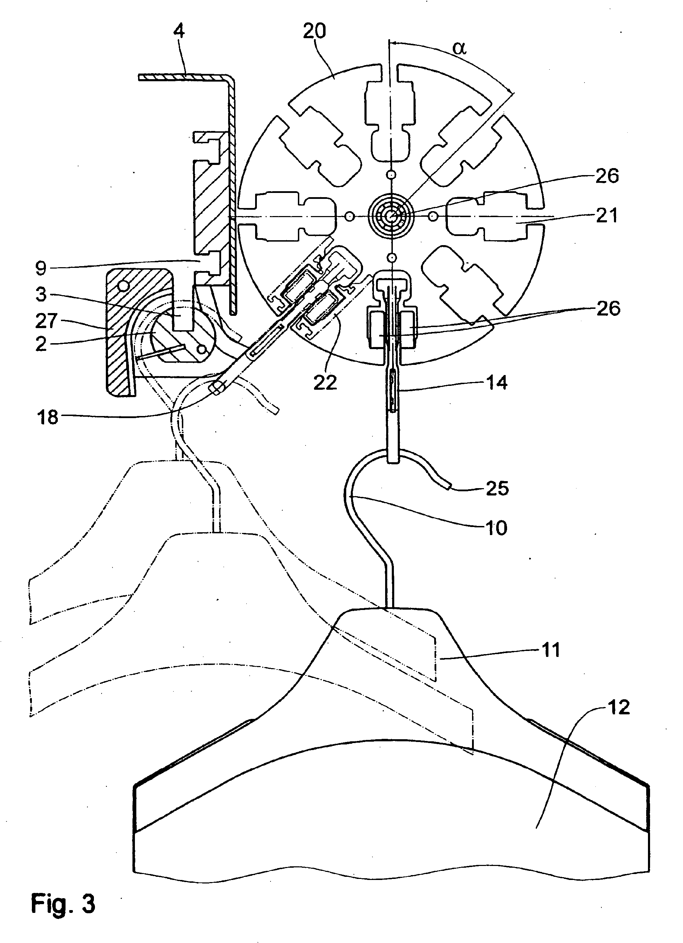

- Fig. 3: einen Querschnitt durch das Zuführ-Transport-System im Bereich seiner Übergabe-Station entsprechend der Schnittlinie III-III in Fig. 1,

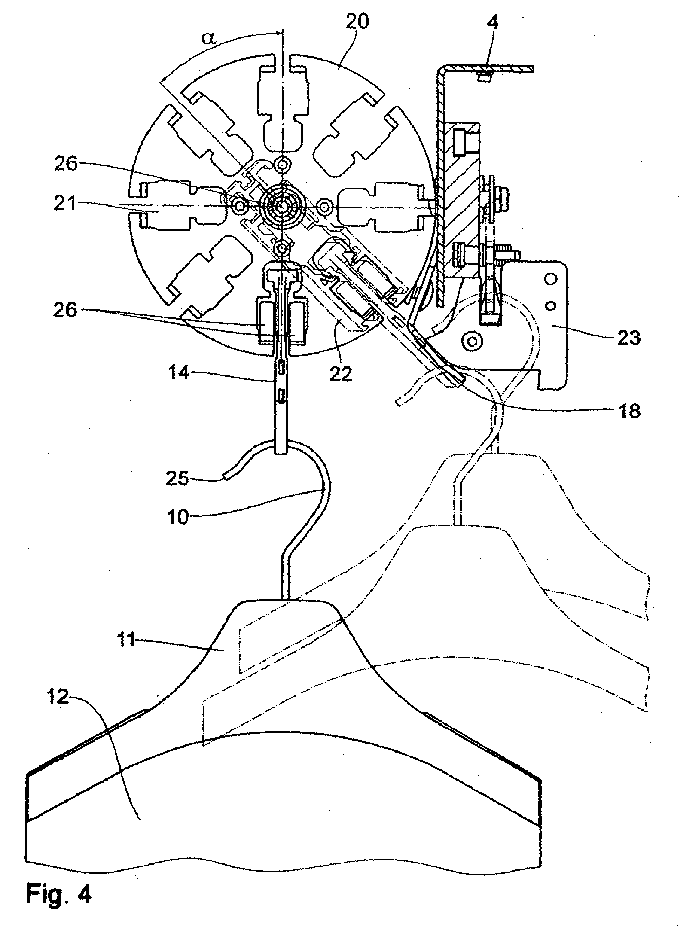

- Fig. 4: eine Stirnansicht der Übergabe-Station entsprechend der Schnittlinie IV-IV in Fig. 1,
- Fig. 5: eine Teil-Ansicht einer Bügel-Führung im Bereich der Übergabe-Station und
- Fig. 6: eine Draufsicht auf die Bügel-Führung.

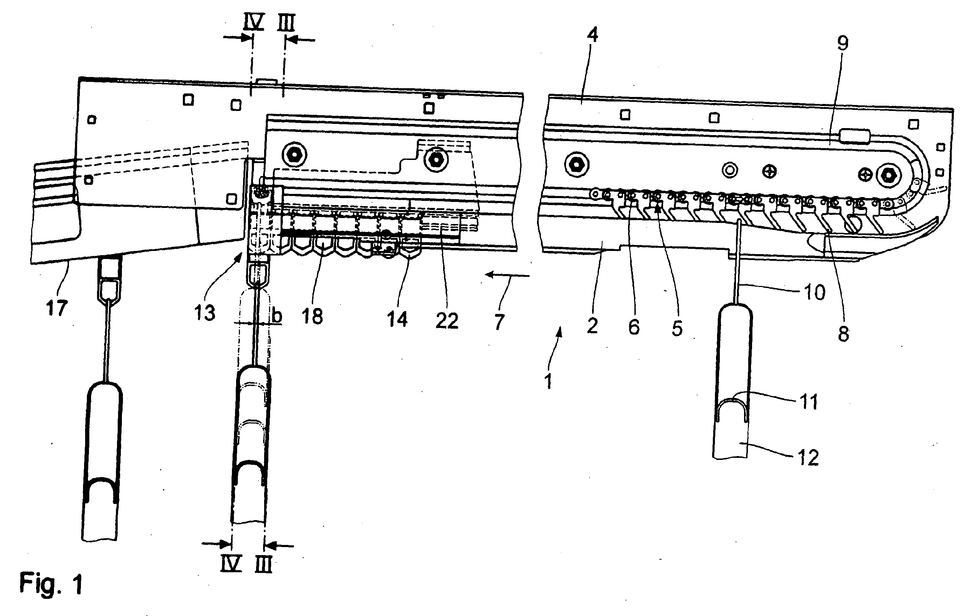

Das in der Zeichnung dargestellte Zuführ-Transport-System 1 weist als Transport-Schiene eine Transport-Stange 2 auf, die im Wesentlichen kreisrund ausgebildet ist und einen nach oben offenen Längs-Schlitz 3 aufweist. Sie ist an einer als Hohlkasten ausgebildeten Trag-Einrichtung 4 gehalten, die mittels geeigneter Befestigungsmittel in einem Raum, beispielsweise an dessen Decke, anbringbar ist. Oberhalb der Transport-Stange 2 ist in der als Hohlkasten-Profil ausgebildeten Trag-Einrichtung 4 eine endlose Antriebs-Kette 5 angeordnet, deren unmittelbar oberhalb der Transport-Stange 2 angeordnetes Untertrum 6 in einer Förderrichtung 7 - in Fig. 1 von rechts nach links - antreibbar ist.

Bei der Antriebs-Kette 5 handelt es sich um eine sogenannte Rollen-Kette, an der nach unten ragende Mitnehmer 8 angebracht sind, die in den Längs-Schlitz 3 der Transport-Stange 2 eintauchen. Die Antriebs-Kette 5 ist in der Trag-Einrichtung 4 mittels Führungs-Schienen 9 gehalten und geführt.

Die Transport-Stange 2 dient zur Aufnahme der in üblicher Weise teilkreisförmigen Haken 10 von Bügeln 11, auf denen zu transportierende Gegenstände 12, in der Regel Kleidungsstücke, transportiert werden sollen. Der Transport der Bügel 11 mit den Gegenstände 12 erfolgt mittels der Antriebs-Kette 5 in Förderrichtung 7, wobei jeweils zwischen zwei benachbarten Mitnehmern 8 nur ein Bügel 11 aufgehängt sein soll. Der Transport der Bügel 11 erfolgt in Förderrichtung 7 zu einer - in Fig. 1 links angeordneten - Übergabe-Station 13, wo jeweils ein Bügel 11 in ein Roll-Halteelement 14 übergeben wird. Diese aus der EP 1 690 811 A1 bekannten Roll-Halteelemente 14 weisen ein nach unten ragendes flaches Tragteil 15 auf, das in seinem oberen Bereich beidseitig mit je einer Laufrolle 16 versehen ist, die in einem Kastenprofil, an dessen Unterseite ein Schlitz ausgebildet ist, abgestützt und geführt werden können, wobei dieses Kastenprofil eine Transport-Schiene 17 bildet, wie sie beispielsweise ebenfalls in der EP 1 690 811 A1 dargestellt und beschrieben ist, worauf ausdrücklich verwiesen wird.

Im unteren Bereich des Roll-Halteelementes 14 ist in dessen Tragteil 15 eine Aufnahme-Öffnung 18 ausgebildet, in die jeweils ein Haken 10 eines Bügels 11 eingehängt werden soll. Am oberen Ende des Tragteils 15 ist ein Anschlag 19 ausgebildet, an dem ein nicht dargestellter Mitnehmer eines weiteren Transport-Systems angreifen kann, der ebenfalls in der EP 1 690 811 dargestellt und beschrieben ist und worauf verwiesen werden darf.

An der Übergabe-Station 13 ist ein taktweise drehantreibbares Übergabe-Rad 20 angeordnet, in dem nach außen offene Ausnehmungen 21 ausgebildet sind, die dem Querschnitt der Roll-Halteelemente 14 angepasst sind, also die Laufrollen 16, das Tragteil 15 und den Anschlag 19 aufnehmen können, wobei der untere Bereich des Tragteils 15 mit der Aufnahme-Öffnung 18 radial nach außen aus dem Übergabe-Rad 20 herausragt. Neben der Transport-Stange 2 - in Fig. 1 hinter dieser - ist eine Zuführ-Schiene 22 angeordnet, über die Roll-Haltelemente 14 dem Übergabe-Rad 20 zugeführt werden.

Auf dem Übergabe-Rad 20 sind die geschilderten Ausnehmungen 21 in gleichen Winkelabständen, im vorliegenden Fall von jeweils 45°, ausgebildet. Vor der Zuführ-Schiene 22 befindet sich jeweils eine Ausnehmung 21, die gegenüber der senkrecht nach unten weisenden Richtung um 45° schräg gestellt ist, - bezogen auf eine Uhr, je nach Blickrichtung - also bei 4.30 Uhr und 7.30 Uhr angeordnet ist. Die Zuführ-Schiene 22, die auf einer Seite direkt bis an das Übergabe-Rad 20 heranragt, ist also in gleicher Weise geneigt angeordnet, so dass jeweils ein Roll-Haltelement 14 von einer nicht dargestellten Einschubvorrichtung in eine Ausnehmung 21 in der geschilderten Schräglage eingeschoben wird.

An der Übergabe-Station 13 befindet sich zwischen der Transport-Stange 2 und einer Anschlag-Platte 23 ein Übergabe-Spalt 24, dessen Breite a in Förderrichtung 7 geringfügig größer ist als die Dicke b des Drahtes des Hakens 10. Es gilt b < a < 2 b. Wenn der Bügel 11 mit dem auf ihm hängenden Gegenstand 12 diesen Spalt 24 erreicht, dann fällt der Bügel 11 mit dem auf ihm hängenden Gegenstand 12 durch Schwerkraft senkrecht nach unten. Das Übergabe-Rad 20 ist derart angeordnet, dass das in ihm befindliche, soeben schräg eingeschobene Roll-Haltelement 14 mit seiner Aufnahme-Öffnung 18 sich unmittelbar unterhalb des freien Endes 25 des Bügel-Hakens 10 in einer Übergabe-Position befindet. Wenn also der Bügel-Haken 10 durch den Übergabe-Spalt 24 nach unten fällt, wird der Haken 10 in der Aufnahme-Öffnung 18 des Tragteils 15 des Roll-Haltelements 14 aufgenommen; der Bügel 11 mit dem auf ihm hängenden Gegenstand 12 ist also gleichsam auf das Roll-Halteelement 14 umgehängt worden. In dieser Übergabe-Position dient die Anschlag-Platte 23 auch als Anlage für das im Übergabe-Rad 20 befindliche, zu beladende Halteelement 14, so dass es eine definierte Position zu dem aufzunehmenden Bügel-Haken 10 hat. Es kann also nicht auf der der Zuführ-Schiene 22 entgegengesetzten Seite aus dem Übergabe-Rad 20 herausfallen. Jeweils nach einer solchen Aufnahme eines Bügels 11 wird das Übergabe-Rad 20 entsprechend der Winkelteilung bzw. des Winkelabstandes α der auf ihm ausgebildeten Ausnehmungen 21 um seine mittlere Drehachse 26 getaktet angetrieben, so dass die Ausnehmung 21 mit dem in ihm befindlichen, einen Bügel 11 tragenden Roll-Halteelement 14 aus der Übergabe-Position in die senkrecht nach unten gerichtete Ausschub-Position kommt. In dieser Ausschub-Position wird dieses Roll-Halteelement 14 zusammen mit dem auf ihm hängenden Bügel 11 aus dem Übergabe-Rad 20 von einem nicht dargestellten Ausstoß-Element ausgestoßen und gelangt in die Transport-Schiene 17, wo es dann weiter transportiert wird.

Damit der freie Fall des Bügels 11 im Übergabe-Spalt 24 nicht durch den in Förderrichtung 7 nacheilenden Mitnehmer 8 behindert wird, verlaufen die Mitnehmer 8 - wie Fig. 1 entnehmbar ist - nach unten zu ihrem freien Ende hin entgegen der Förderrichtung 7 nach hinten. Der nach unten fallende Haken 10 ist also frei von dem Mitnehmer 8, der ihn bis zum Übergabe-Spalt 24 geschoben hat.

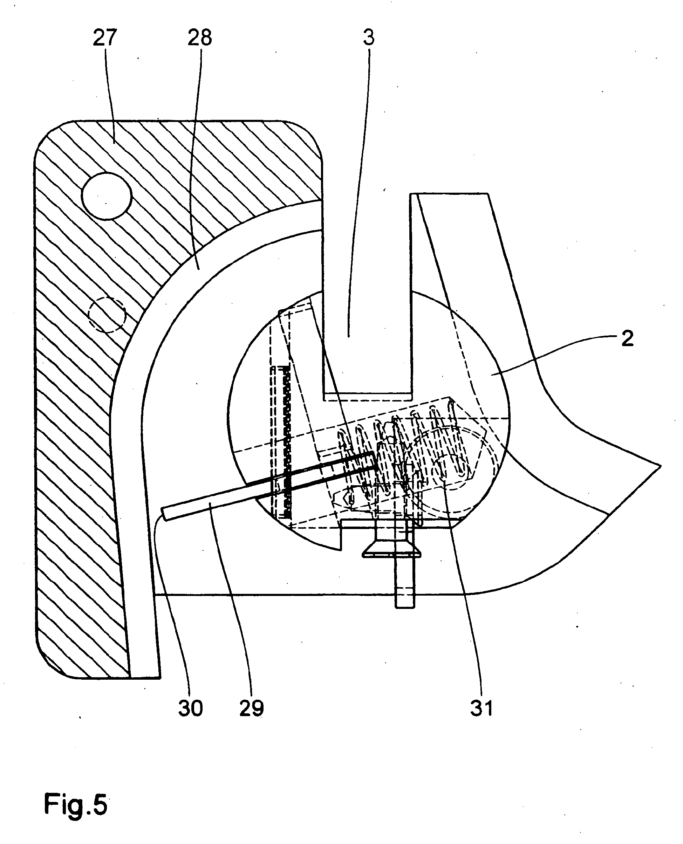

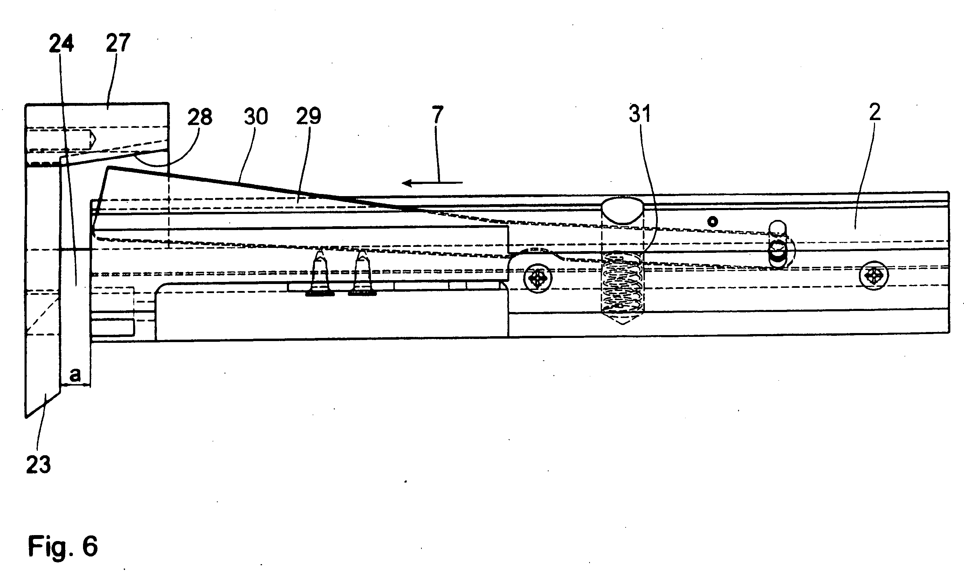

An der Übergabe-Station 13 befindet sich weiterhin eine Bügel-Führung 27, die dem Profil des Hakens 10 angepasst ist, so dass der Bügel 11 mit dem auf ihm hängenden Gegenstand 12 in eine normal hängende Lage gezwungen wird, wie es beispielsweise in Fig. 5 und 6 angedeutet ist. Diese Bügel-Führung 27 weist zum einen eine Bügel-Anlagefläche 28 auf, gegen die der Bügel 11 mit seiner Außenseite anliegt. Des Weiteren ist eine federnd ausgebildete Andrück-Schiene 29 in der Transport-Stange 2 ausgebildet, auf die der Haken 10 aufläuft und durch die er gegen die Bügel-Anlagefläche 28 gedrückt wird. Diese Andrück-Schiene 29 ist mit einer schräg zur Förderrichtung 7 verlaufenden Auflauf-Kante 30 versehen und wird mittels einer in der Transport-Stange 2 angeordneten Druckfeder 31 nachgiebig nach außen in Richtung zur Bügel-Anlagefläche 28 gedrückt.

## Patentansprüche

1. Zuführ-Transport-System (1) für Bügel (11) mit darauf hängenden Gegenständen (12), insbesondere Kleidungsstücke,
- mit einer Transport-Schiene (2) zur Aufnahme und Führung von Haken (10) der Bügel (11),
-- wobei die Haken (10) ein seitlich vorstehendes freies Ende (25) aufweisen,
- mit einer an einem Ende der Transport-Schiene (2) angeordneten Übergabe-Station (13) zur Übergabe je eines Bügels (11) auf einzeln transportierbare Halteelemente (14), die jeweils in ihrem unteren Bereich einer Aufnahme-Öffnung (18) für einen Haken (10) eines Bügels (11) aufweisen,
- mit einem der Übergabe-Station (13) zugeordneten Übergabe-Rad (20), **dadurch gekennzeichnet, dass**
-- das Übergabe-Rad (20) um eine im Wesentlichen zur Transport-Schiene (2) parallele Drehachse (26) um gleiche Winkelabstände taktweise antreibbar ist,
-- das Übergabe-Rad (20) in dem Winkelabstand über seinen Umfang verteilt den Haltelementen (14) angepasste Ausnehmungen (21) zur Aufnahme je eines Halteelementes (14) aufweist,
--- die in Richtung der Drehachse (26) offen sind und
--- die derart ausgebildet sind, dass der Bereich des Halteelementes (14) mit der Aufnahme-Öffnung (18) über den Umfang des Übergabe-Rades (20) hinausragt,
- mit einem an dem der Übergabe-Station (13) zugeordneten Ende der Transport-Schiene (2) angeordneten, nach unten offenen Übergabe-Spalt (24) und
- mit einer derartigen Anordnung des Übergabe-Rades (20) und des Übergabe-Spalts (24) zueinander, dass ein in einer Übergabe-Position um einen Winkelabstand (α) gegenüber der Vertikalen schräg aus dem Übergabe-Rad (20) ragendes Halteelement (14) mit seiner Aufnahme-Öffnung (18) sich unterhalb des freien Endes (25) eines in den Übergabe-Spalt (24) gelangenden Hakens (10) eines Bügels (11) befindet.

2. Zuführ-Transport-System (1) nach Anspruch 1, **dadurch gekennzeichnet,**
**dass** benachbarte Ausnehmungen (21) am Übergabe-Rad (20) im Winkelabstand (α) von 45° ausgebildet sind.

3. Zuführ-Transport-System (1) nach Anspruch 2, **dadurch gekennzeichnet,**
**dass** das Übergabe-Rad (20) und der Übergabe-Spalt (24) derart zueinander angeordnet sind, dass ein um einen Winkelabstand (α) gegenüber der Vertikalen schräg nach unten aus dem Übergabe-Rad (20) ragendes Halteelement (14) sich mit seiner Aufnahme-Öffnung (18) unterhalb des freien Endes (25) eines in den Übergabe-Spalt (24) gelangenden Hakens (10) eines Bügels (11) befindet.

4. Zuführ-Transport-System (1) nach einem der Ansprüche 1 bis 3, **dadurch gekennzeichnet,**
**dass** das Halteelement (14) sich mit seiner Aufnahme-Öffnung (18) unmittelbar unterhalb des freien Endes (25) eines in den Übergabe-Spalt (24) gelangenden Hakens (10) eines Bügels (11) befindet.

5. Zuführ-Transport-System (1) nach einem der Ansprüche 1 bis 4, **dadurch gekennzeichnet,**
**dass** dem Übergabe-Rad (20) eine Zuführ-Schiene (22) zur Zuführung von Haltelementen (14) vorgeordnet ist, die am Übergabe-Rad (20) um mindestens einen Winkelabstand gegenüber der Vertikalen in die Übergabe-Position zwischen Bügel (11) und Haltelement (14) verdreht ist.

6. Zuführ-Transport-System (1) nach einem Ansprüche 1 bis 5, **dadurch gekennzeichnet,**
**dass** dem Übergabe-Rad (20) eine Transport-Schiene (17) nachgeordnet ist, die gegenüber der Übergabe-Position um mindestens einen Winkelabstand versetzt ist.

7. Zuführ-Transport-System (1) nach einem der Ansprüche 1 bis 6, **dadurch gekennzeichnet,**
**dass** an der Übergabe-Station (13) eine Bügel-Führung (27) vorgesehen ist.

8. Zuführ-Transport-System (1) nach Anspruch 7, **dadurch gekennzeichnet,**
**dass** die Bügel-Führung (27) eine Bügel-Anlagefläche (28) zur führenden Anlage zumindestens eines Teil-Außenumfangs des Hakens (10) eines Bügels (11) aufweist.

9. Zuführ-Transport-System (1) nach Anspruch 7 oder 8, **dadurch gekennzeichnet,**
**dass** die Bügel-Führung (27) eine an der Innenseite des Hakens (10) eines Bügels (11) angreifende, federnd gelagerte Andrück-Schiene (29) aufweist.

10. Zuführ-Transport-System (1) nach einem der Ansprüche 1 bis 9, **dadurch gekennzeichnet,**
**dass** der Transport-Schiene (2) eine Antriebs-Kette (5) mit der Transport-Schiene (2) zugewandten Mitnehmern (8) zum Transport der Bügel (11) auf der Transport-Schiene (2) zugeordnet ist.

11. Zuführ-Transport-System (1) nach Anspruch 10, **dadurch gekennzeichnet,**
**dass** die Transport-Schiene (2) einen zur Antriebs-Kette (5) hin offenen Längs-Schlitz (3) aufweist, in den die Mitnehmer (8) eingreifen und
**dass** die Mitnehmer (8) nach unten und - bezogen auf eine zur Übergabe-Station (13) hin in gerichtete Förderrichtung (7) der Antriebs-Kette (5) - schräg nach hinten verlaufend ausgebildet sind.

12. Zuführ-Transport-System (1) nach einem der Ansprüche 1 bis 11, **dadurch gekennzeichnet,**
**dass** der Übergabe-Spalt (24) eine Breite (a) aufweist, die größer als die Dicke (b) des Hakens (10) eines Bügels (11) und kleiner als die Gesamt-Dicke von zwei Haken (10) von Bügeln (1.1) ist.

13. Zuführ-Transport-System (1) nach einem der Ansprüche 1 bis 12, **dadurch gekennzeichnet,**
**dass** in der Übergabe-Position eine Aufnahme-Öffnung (18) sich vor einem Anschlag (23) für ein in der Aufnahme-Öffnung (18) befindliches Halteelement (14) befindet.

## Claims

1. Feeder transport system (1) for hangers (11) with objects (12), in particular clothes, hanging thereon, the feeder transport system (1) comprising
- a transport rail (2) for receiving and guiding hooks (10) of the hangers (11),
-- with the hooks (10) comprising a laterally projecting free end (25);
- a transfer station (13) arranged at one end of the transport rail (2) for transferring in each case one hanger (11) to individually transportable retaining elements (14) which comprise a receiving opening (18) for a hook (10) of a hanger (11), the receiving opening (18) being in each case disposed in the lower region of the retaining elements (14);
- a transfer wheel (20) allocated to the transfer station (13),
**characterized in that**
-- the transfer wheel (20) is intermittently drivable through identical angular distances about an axis of rotation (26) which is substantially parallel to the transport rail (2);
-- the transfer wheel (20) comprises recesses (21) which are adapted to the retaining elements (14) for receiving in each case one of the retaining elements (14), and which are distributed along the angular distance across the periphery of the transfer wheel (20),
--- the recesses (21) being open in the direction of the axis of rotation (26), and
--- the recesses being configured in such a way that the region of the retaining element (14) with the receiving opening (18) projects beyond the periphery of the transfer wheel (20);
- a downwardly open transfer gap (24) which is arranged on an end of the transport rail (2), the end being allocated to the transfer station (13); and
- an arrangement of the transfer wheel (20) and the transfer gap (24) relative to each other, the arrangement being such that the receiving opening (18) of a retaining element (14), which projects obliquely out of the transfer wheel (20) at an angular distance (α) relative to the vertical when in a transfer position, is located below the free end (25) of a hook (10) of a hanger (11) entering the transfer gap (24).

2. Feeder transport system (1) according to claim 1, **characterized in that** adjacent recesses (21) on the transfer wheel (20) are formed at an angular distance (α) of 45°.

3. Feeder transport system (1) according to claim 2, **characterized in that** the transfer wheel (20) and the transfer gap (24) are arranged relative to each other in such a way that the receiving opening (18) of a retaining element (14), which projects obliquely downwardly and out of the transfer wheel (20) at an angular distance (α) relative to the vertical, is located below the free end (25) of a hook (10) of a hanger (11) entering the transfer gap (24).

4. Feeder transport system (1) according to one of claims 1 to 3, **characterized in**
**that** the receiving opening (18) of the retaining element (14) is located directly underneath the free end (25) of a hook (10) of a hanger (11) entering the transfer gap (24).

5. Feeder transport system (1) according to one of claims 1 to 4, **characterized in**
**that** a feeder rail (22) for feeding retaining elements (14) is arranged in front of the transfer wheel (20), the feeder rail (22) being rotated at the transfer wheel (20) through at least one angular distance relative to the vertical into the transfer position between hanger (11) and retaining element (14).

6. Feeder transport system (1) according to one of claims 1 to 5, **characterized in**
**that** a transport rail (17) is arranged behind the transfer wheel (20), the transport rail (17) being offset relative to the transfer position by at least one angular distance.

7. Feeder transport system (1) according to one of claims 1 to 6, **characterized in**
**that** a hanger guide (27) is provided at the transfer station (13).

8. Feeder transport system (1) according to claim 7, **characterized in that** the hanger guide (27) comprises a hanger contact surface (28) for guided contact of at least a partial outer periphery of the hook (10) of a hanger (11).

9. Feeder transport system (1) according to claim 7 or 8, **characterized in that** the hanger guide (27) comprises a resiliently mounted pressure rail (29) which engages with the inside of the hook (10) of a hanger (11).

10. Feeder transport system (1) according to one of claims 1 to 9, **characterized in**
**that** a drive chain (5) with entrainers (8) facing the transport rail (2) is allocated to the transport rail (2) for transporting the hangers (11) along the transport rail (2).

11. Feeder transport system (1) according to claim 10, **characterized in that** the transport rail (2) comprises a longitudinal slot (3) which is open towards the drive chain (5) and which may be engaged by the entrainers (8); and
**that** the entrainers (8) extend downwardly and obliquely rearwardly relative to a direction of conveyance (7) of the drive chain (5), the direction of conveyance (7) being directed towards the transfer station (13).

12. Feeder transport system (1) according to one of claims 1 to 11, **characterized in**
**that** the transfer gap (24) has a width (a) which is greater than the thickness (b) of the hook (10) of a hanger (11) and smaller than the total thickness of two hooks (10) of hangers (11).

13. Feeder transport system according to one of claims 1 to 12, **characterized in**
**that** in the transfer position, a receiving opening (18) is located in front of a stop (23) for a retaining element (14) located in the receiving opening (18).

## Revendications

1. Système de transport et d'acheminement (1) pour cintres (11) avec des objets (12) suspendus, en particulier des vêtements,
- avec un rail de transport (2) pour le logement et le guidage de crochets (10) des cintres (11),
-- les crochets (10) présentant une extrémité (25) libre dépassant latéralement,
- avec un poste de remise (13) disposé sur une extrémité du rail de transport (2) pour la remise d'un cintre (11) sur des éléments de retenue (14) transportables individuellement qui présentent respectivement dans leur zone inférieure une ouverture de réception (18) pour un crochet (10) d'un cintre (11),
- avec une roue de remise (20) associée au poste de remise (13), **caractérisé en ce que**
-- la roue de remise (20) peut être entraînée en cadence autour d'un axe de rotation (26) parallèle essentiellement au rail de transport (2) selon des distances angulaires identiques,
-- la roue de remise (20) présente dans la distance angulaire, répartis sur sa périphérie, des évidements (21) adaptés aux éléments de retenue (14) pour le logement d'un élément de retenue (14),
--- qui sont ouverts en direction de l'axe de rotation (26) et
--- qui sont réalisés de sorte que la zone de l'élément de retenue (14) avec l'ouverture de réception (18) dépasse au-delà de la périphérie de la roue de remise (20),
- avec une fente de remise (24) ouverte vers le bas, disposée sur l'extrémité associée au poste de remise (13) du rail de transport (2) et
- avec une telle disposition de la roue de remise (20) et de la fente de remise (24) l'une par rapport à l'autre qu'un élément de retenue (14) émergeant dans une position de remise selon une distance angulaire (α) par rapport à la verticale en biais de la roue de remise (20) avec son ouverture de réception (18) se trouve au-dessous de l'extrémité (25) libre d'un crochet (10) parvenant dans la fente de remise (24) d'un cintre (11).

2. Système de transport et d'acheminement (1) selon la revendication 1, **caractérisé en ce**
**que** des évidements (21) contigus sont réalisés sur la roue de remise (20) à une distance angulaire (α) de 45

3. Système de transport et d'acheminement (1) selon la revendication 2, **caractérisé en ce**
**que** la roue de remise (20) et la fente de remise (24) sont disposées l'une par rapport à l'autre de sorte qu'un élément de retenue (14) émergeant selon une distance angulaire (α) par rapport à la verticale en biais vers le bas de la roue de remise (20) avec son ouverture de réception (18) se trouve au-dessous de l'extrémité (25) libre d'un crochet (10) parvenant dans la fente de remise (24) d'un cintre (11).

4. Système de transport et d'acheminement (1) selon l'une quelconque des revendications 1 à 3, **caractérisé en ce**
**que** l'élément de retenue (14) avec son ouverture de réception (18) se trouve directement au-dessous de l'extrémité (25) libre d'un crochet (10) parvenant dans la fente de remise (24) d'un cintre (11).

5. Système de transport et d'acheminement (1) selon l'une quelconque des revendications 1 à 4, **caractérisé en ce**
**qu'**un rail d'acheminement (22) pour l'acheminement d'éléments de retenue (14) est disposé en amont de la roue de remise (20), lequel est pivoté sur la roue de remise (20) selon au moins une distance angulaire par rapport à la verticale dans la position de remise entre le cintre (11) et l'élément de retenue (14).

6. Système de transport et d'acheminement (1) selon l'une quelconque des revendications 1 à 5, **caractérisé en ce**
**qu'**un rail de transport (17) est disposé en aval de la roue de remise (20), lequel est décalé par rapport à la position de remise selon au moins une distance angulaire.

7. Système de transport et d'acheminement (1) selon l'une quelconque des revendications 1 à 6, **caractérisé en ce**
**qu'**un guidage de cintre (27) est prévu sur le poste de remise (13).

8. Système de transport et d'acheminement (1) selon la revendication 7, **caractérisé en ce**
**que** le guidage de cintre (27) présente une surface d'appui de cintre (28) pour l'appui de guidage d'au moins une périphérie extérieure partielle du crochet (10) d'un cintre (11).

9. Système de transport et d'acheminement (1) selon la revendication 7 ou 8, **caractérisé en ce**
**que** le guidage de cintre (27) présente un rail presseur (29) monté sur ressort, engageant le côté intérieur du crochet (10) d'un cintre (11).

10. Système de transport et d'acheminement (1) selon l'une quelconque des revendications 1 à 9, **caractérisé en ce**
**qu'**au rail de transport (2) est associée une chaîne d'entraînement (5) avec des entraîneurs (8) tournés vers le rail de transport (2) pour le transport des cintres (11) sur le rail de transport (2).

11. Système de transport et d'acheminement (1) selon la revendication 10, **caractérisé en ce**
**que** le rail de transport (2) présente une fente longitudinale (3) ouverte vers la chaîne d'entraînement (5), dans laquelle les entraîneurs (8) s'engagent, et
en ce que les entraîneurs (8) sont réalisés s'étendant vers le bas et en biais vers l'arrière par rapport à un poste de remise (13) dans le sens de transport (7) dirigé de la chaîne d'entraînement (5).

12. Système de transport et d'acheminement (1) selon l'une quelconque des revendications 1 à 11, **caractérisé en ce**
**que** la fente de remise (24) présente une largeur (a) qui est supérieure à l'épaisseur (b) du crochet (10) d'un cintre (11) et inférieure à l'épaisseur totale de deux crochets (10) de cintres (11).

13. Système de transport et d'acheminement (1) selon l'une quelconque des revendications 1 à 12, **caractérisé en ce**
**qu'**une ouverture de réception (18) se trouve dans la position de remise en amont d'une butée (23) pour un élément de retenue (14) se trouvant dans l'ouverture de réception (18).
